# EUROPÄISCHE PATENTSCHRIFT

(11) **EP 0 539 872 B1**
(45) Veröffentlichungstag und Bekanntmachung des Hinweises auf die Patenterteilung: **22.01.1997**
(21) Anmeldenummer: 92118138.4
(22) Anmeldetag: 23.10.1992
(51) Int. Cl.: B60R 21/26

(54) **Gasgenerator, insbesondere für ein aufblasbares Aufprallkissen zum Schutz eines Kraftfahrzeug-Insassen vor Verletzungen**
Gas generator, in particular for an airbag protecting a vehicle passenger against injuries
Générateur de gaz, en particulier pour un coussin gonflable de protection d'un passager de véhicule contre les blessures

(30) Priorität: 28.10.1991 DE 4135547
(43) Veröffentlichungstag der Anmeldung: 05.05.1993
(73) Patentinhaber: Dynamit Nobel GmbH Explosivstoff- und Systemtechnik, 53840 Troisdorf (DE)
(72) Erfinder: Brede, Uwe, W-8510 Fürth (DE); Kraft, Josef, W-8438 Berg (DE); Seebeck, Wolfram, W-8501 Veitsbronn (DE)
(74) Vertreter: Scherzberg, Andreas, Dr.

(56) Entgegenhaltungen:
- FR-A- 2 235 817
- US-A- 3 690 695
- US-A- 5 060 973

## Beschreibung

Die Erfindung betrifft einen Gasgenerator, insbesondere für ein aufblasbares Aufprallkissen zum Schutz eines Kraftfahrzeug-Insassen vor Verletzungen nach dem Oberbegriff des Anspruchs 1.

Bei den derzeit verwendeten Gasgeneratoren für aufblasbare Aufprallkissen (auch "Airbag" genannt) wird als brennbares gasentwickelndes Material eine Ladung in Tabletten- oder Scheibenform verwendet. Beim Zünden erzeugt dieser Gassatz das Nutz- oder Druckgas zum Aufblasen des Aufprallkissens. Der Nachteil bei der Verbrennung fester gasentwickelnder Materialien besteht in dem recht hohen bei der Verbrennung entstehenden Schlackenanteil, der mehr als 50 % der eingesetzten Gassatzmasse ausmacht. Aufgrund der Schlacke- und Staubbildung bei der Verbrennung sind aufwendige Filterstufen im Gasgenerator erforderlich, um Schlacke- und Staubpartikel zurückzuhalten. Andernfalls würde beim Austritt dieser Partikel das Aufprallkissen beschädigt und die Insassen in Gefahr gebracht werden können.

Die nach Art. 54(3) und (4) EPÜ i.V.m. Art. 56 EPÜ ältere Anmeldung ,EP-A-0 468 724 beschreibt einen Gasgenerator für ein aufblasbares Aufprallkissen zum Schutz eines Kraftfahrzeug-Insassen vor Verletzungen. Als gasentwickelndes Material wird Flüssiggas verwendet, welches sich in einem Behälter befindet, in dem ein von einer Anzündladung angetriebener verschiebbarer Kolben angeordnet ist. Bei Zündung der Anzündladung preßt der Kolben das Flüssiggas aus dem Behälter in eine Reaktionskammer, in der das Gas gezündet wird.

Die US 3,690,695 beschreibt ebenfalls einen Gasgenerator mit einem Vorratsraum zum Speichern von Flüssiggas. Der Vorratsraum ist durch eine Trennwand vom Verbrennungsraum getrennt. Das Druckgas wird geschaffen, indem Magnesium in einer Kohlendioxid-Atmosphäre verbrennt. Es tritt demnach keine Verbrennung des Flüssiggases selbst ein, sondern eine chemische Reaktion.

Der Erfindung liegt die Aufgabe zugrunde einen Gasgenerator, insbesondere für ein aufblasbares Aufpallkissen zum Schutz eines Kraftfahrzeug-Insassen vor Verletzungen zu schaffen, bei dem Schlackerückhalteeinrichtungen nicht erforderlich sind.

Erfindungsgemäß wird diese Aufgabe durch die kennzeichnenden Merkmale des Anspruchs 1 gelöst.

Der erfindungsgemäße Gasgenerator weist ein Gehäuse auf, in dem in einem Vorratsraum Flüssiggas als gasentwickelndes Material eingebracht ist. Bei dem Flüssiggas handelt es sich um ein Material, das unter Normalbedingungen (Zimmertemperatur und Normaldruck) im gasförmigen Aggregatzustand vorliegt und aufgrund des Druckes, unter dem es im Vorratsraum steht, verflüssigt ist. Dieses unter Druck stehende Flüssiggas wird kontrolliert in den zum Vorratsraum benachbarten Verbrennungsraum des Gehäuses eingespritzt. Kurz vor bzw. mit dem Einlaß des Flüssiggases in den Verbrennungsraum wird eine Anzündvorrichtung mit einer Anzündladung gezündet. Die Anzündschwaden und heißen Verbrennungsgase entzünden das Flüssiggas, das aufgrund der auftretenden Expansion im Verbrennungsraum verdampft bzw. sich verflüchtigt. Das brennbare Flüssiggas verbrennt im Verbrennungsraum, ohne daß feste Partikel zurückbleiben. Auf Filterstufen, die der mindestens einen Austrittsöffnung der Gasgenerator-Gehäusewand vorgelagert sind, kann bei dem erfindungsgemäßen Gasgenerator daher verzichtet werden. Sofern Filterstufen vorgesehen sind, dienen diese ausschließlich Kühlzwecken. Die Kühlung kann aber auch auf andere Weise erfolgen, indem etwa dem Verbrennungsraum ein Verteilerraum des Gehäuses nachgeschaltet ist, von dem aus die Verbrennungsgase über die mindestens eine Austrittsöffnung nach außen gelangen.

Die zeitliche Abfolge, in der sowohl die Anzündschwaden der Anzündladung als auch das Flüssiggas in den Verbrennungsraum eingelassen werden, erfolgt vorteilhafterweise über ein bei Verbrennung der Anzündladung durch den damit verbundenen Druckanstieg vorbewegtes Element in Form eines Kolbens. Der Kolben bewegt sich bei gezündeter Anzündladung auf die den Vorratsraum von der Verbrennungskammer trennende Trennwand zu und durchstößt diese lokal. Das in Bewegungsrichtung vordere Ende des Kolbens ist derart ausgebildet, daß bei die Trennwand durchstoßendem Kolben Flüssiggas aus dem Vorratsraum in den Verbrennungsraum eintritt. Demgegenüber ist das hintere Ende des Kolbens derart ausgebildet, daß die Verbrennungsgase der Anzündladung in den Verbrennungsraum eindringen, wenn der Kolben mit seinem vorderen Ende in die Trennwand hineingetrieben ist. Durch ein einziges Element, nämlich den Kolben, kann damit auf vergleichsweise einfache Art eine genaue zeitliche Steuerung des Eindringens von Flüssiggas und Verbrennungsgasen erzielt werden. Die Ausgestaltung der Enden des Kolbens kann dabei so getroffen sein, daß entweder das Flüssiggas oder die Verbrennungsgase der Anzündladung zuerst oder gleichzeitig in den Verbrennungsraum hineinströmen.

Zur Einleitung des Flüssiggases und der Verbrennungsgase in den Verbrennungsraum sind an den Enden des Kolbens vorteilhafterweise mindestens ein Flüssiggaskanal und mindestens ein Zündkanal vorgesehen. Bei die Trennwand durchstoßenden vorderen Kolbenende ist der Vorratsraum über den mindestens einen Flüssiggaskanal mit dem Verbrennungsraum verbunden; das unter einem bestimmten Überdruck stehende Flüssiggas gelangt über den Flüssiggaskanal aus dem Vorratsraum in den Verbrennungsraum. Am hinteren Ende des Kolbens ist dieser mit mindestens einem Zündkanal versehen, über den der Verbrennungsraum mit einem Vorverbrennungsraum verbunden ist, in dem die Anzündvorrichtung mit der Anzündladung untergebracht ist.

Vorzugsweise ist der Kolben in dem Vorverbrennungsraum bewegbar geführt, wobei er an der Innenfläche der den Vorverbrennungsraum begrenzenden Wand anliegt. Dieser Vorverbrennungsraum mündet in den Verbrennungsraum, so daß der mindestens eine Zündkanal, der in der hinteren Stirnfläche des Kolbens beginnt und in der Kolbenumfangsfläche endet, solange durch die Vorverbrennungsraumwand verschlossen ist, bis die Öffnung des Zündkanals in der Kolbenumfangsfläche über die Verbindungskante zwischen Vorverbrennungsraum und Verbrennungsraum hinaus bewegt ist.

Vorzugsweise sind mehrere Zündkanäle vorgesehen, die schräg zur Längsachse des Kolbens verlaufen und in einem zentralen Bereich der hinteren Stirnfläche des Kolbens beginnen, um in der Kolbenumfangsfläche zu enden. Der Flüssiggaskanal besteht vorzugsweise aus zwei Abschnitten, nämlich einem axial zum Kolben verlaufenden ersten Abschnitt, der nach Art einer in die vordere Stirnfläche des Kolbens eingebrachten Sackbohrung ausgebildet ist. Das in dem Kolben befindliche Ende dieses ersten Flüssiggaskanalabschnitts ist mit mehreren radial verlaufenden zweiten Flüssiggaskanalabschnitten verbunden, die in der Kolbenumfangsfläche enden. Durch die hier beschriebenen Arten der Ausbildung der Flüssiggaskanäle und der Zündkanäle wird ein Ausströmen von Flüssiggas und Verbrennungsgasen der Anzündladung zu allen Seiten um den Kolben herum in dessen sich durch den Verbrennungsraum erstreckenden Bereich erzielt. Damit entsteht im gesamten Verbrennungsraum eine gleichmäßige Zündung des Flüssiggases.

Vorteilhafterweise ist die Trennwand zwischen dem Verbrennungsraum und dem Vorratsraum bewegbar ausgebildet. Dadurch wird erreicht, daß mit steigendem Innendruck im Verbrennungsraum die Trennwand in den Vorratsraum hineinbewegt wird, um diesen volumenmäßig zu verkleinern. Bei Vorbewegung der Trennwand wird auf das in dem Vorratsraum befindliche Flüssiggas Druck ausgeübt, aufgrund dessen weiteres Flüssiggas über den Flüssiggaskanal aus dem Vorratsraum in den Verbrennungsraum eingespritzt wird. Die heißen Verbrennungsgase des Verbrennungsraumes zünden dabei das jeweils austretende und sich dabei verflüchtigende Flüssiggas, so daß eine sich selbst unterhaltende Verbrennung im Verbrennungsraum abläuft. Der Druck der Verbrennungsgase auf die Trennwand kann durch die Anzahl der in der Verbrennungsraumwand ausgebildeten Austrittsöffnungen und deren Größe beeinflußt werden. Damit läßt sich auch die Geschwindigkeit beeinflussen, mit der die Trennwand vorbewegt wird.

Bei der Ausgestaltung des erfindungsgemäßen Gasgenerators mit bewegbarer Trennwand ist in vorteilhafter Weiterbildung der Erfindung vorgesehen, daß der Kolben an seinem in die Trennwand eingetriebenen Ende fest und unlösbar mit der Trennwand verbunden ist, sich also mit dieser mitbewegt. Dies hat den Vorteil, daß für die Ausströmung des Flüssiggases aus dem Vorratsraum in den Verbrennungsraum über den gesamten Verbrennungsprozeß hin die gleichen Bedingungen gelten, was die Dimensionierung des Flüssiggaskanals betrifft. Bei einem Herausgleiten des Kolbens aus der Trennwand bei deren Bewegung würde schlagartig eine im Querschnitt wesentlich größere Verbindung zwischen Vorratsraum und Verbrennungsraum geschaffen werden. Dies würde sich unter Umständen nachteilig auf den weiteren Verbrennungsprozeß auswirken.

Die Verbindung zwischen dem Kolben und der Trennwand erfolgt vorzugsweise infolge von Klemmwirkung zwischen Kolben und Trennwand. Der Kolben, der bei bewegbarer Trennwand mit dieser mitbewegt werden soll, wird an seinem hinteren Ende nicht gehalten, sondern ist insoweit frei bewegbar. Beim Durchstoßen der Trennwand entsteht zur klemmenden Verbindung von Trennwand und Kolben ein Loch mit sich zum Vorratsraum hin verjüngendem Durchmesser. Die Ausbildung eines derartigen Durchstoßloches kann beispielsweise durch entsprechende Vorbehandlung der Trennwand erzielt werden.

Eine andere Möglichkeit der Ausbildung der Durchstoßstelle der Trennwand besteht darin, daß die Trennwand im Bereich ihrer Durchstoßstelle eine verringerte Wandstärke aufweist. Damit setzt die Trennwand dem Kolben beim Durchstoßen einen geringeren Widerstand entgegen. Die Trennwand ist im Bereich ihrer verdünnten Durchstoßstelle mit einer sich konisch verjüngenden Ausnehmung versehen, die auf der dem Kolben zugewandten Seite der Trennwand ausgebildet ist. Bei konisch sich verjüngendem vorderen Ende des Kolbens verkeilt sich dieses Kolbenende bei durchstoßener Trennwand mit dem Umfangsrand der Ausnehmung, so daß sich Kolben und Trennwand klemmend verbinden. Diese Klemmkraft muß ausreichend sein, um ein Lösen des Kolbens bei ansteigendem Flüssiggasdruck infolge der Vorbewegung der Trennwand zu verhindern.

Statt einer bewegbaren Trennwand kann gemäß einer weiteren vorteilhaften Ausgestaltung der Erfindung als Vorratsraum auch ein Behälter verwendet werden, der in dem Gehäuse untergebracht ist und sich bei Druckbeaufschlagung verformt. Auch bei dieser Ausgestaltung der Erfindung bewegt sich der Kolben, der in dem den Vorratsraum von dem Verbrennungsraum trennenden Wandabschnitt des Behälters eingedrungen ist, sich mit dem Behälter bei dessen Verformung. Diese Ausgestaltung der Erfindung hat den Vorteil, daß nicht für eine Führung der Trennwand gesorgt werden muß, die mitunter konstruktiv aufwendig sein kann, um Verkantungen der Trennwand zu vermeiden.

Um die Form desjenigen Behälterwandabschnittes bei Verformung des Behälters im wesentlichen beizubehalten, den der Kolben durchstoßen hat und mit dem er klemmend verbunden ist, ist vorteilhafterweise auf der Außenseite dieses Behälterwandabschnittes (Innenfläche des Verbrennungsraums) eine formstabile Druckplatte angeordnet, über die der Behälter bei Druckbeaufschlagung der Druckplatte verformt wird und sich zusammenfaltet, ohne daß der Behälterwandabschnitt im Bereich der Druckplatte wesentlich verformt wird. Damit kann der zuverlässige Sitz des Kolbenendes in der Behälterwand gewährleistet werden.

Der erfindungsgemäße Gasgenerator wurde bisher für den Fall beschrieben, daß das Flüssiggas in einem einzigen Vorratsbehälter bzw. Vorratsraum im Gehäuse untergebracht ist. Der Begriff Flüssiggas ist im Rahmen dieser Erfindung derart zu verstehen, daß darunter auch Flüssiggasgemische fallen. Bei einem Flüssiggasgemisch, das aus mehreren Flüssiggaskomponenten besteht, liegt dieses Flüssiggasgemisch bereits vermischt in dem Vorratsbehälter bzw. im Vorratsraum vor. Mitunter kann es aber auch vorteilhaft sein, bei einem Flüssiggasgemisch die zu mischenden Komponenten bis zum Einströmen in den Verbrennungsraum getrennt voneinander zu lagern. Bei Verwendung eines Flüssiggasgemisches aus zwei Flüssiggaskomponenten, die getrennt voneinander im Gasgeneratorgehäuse untergebracht werden sollen, sind bei einer vorteilhaften Weiterbildung der Erfindung zwei Vorratsbehälter bzw. zwei Vorratsräume für jeweils eine Flüssiggaskomponente vorgesehen. Diese beiden Behälter bzw. Vorratsräume liegen vorteilhafterweise in Kolbenbewegungsrichtung hintereinander, so daß ein einziger Kolben beide Vorratsbehälter bzw. beide Vorratsräume durchstoßen kann, wobei sich der Kolben durch den in Kolbenbewegungsrichtung ersten Vorratsbehälter bzw. Vorratsraum hindurch erstreckt und mit seinem vorderen Ende in den zweiten Vorratsbehälter bzw. Vorratsraum eindringt. In seinem vorderen Abschnitt ist der Kolben hierbei mit zwei voneinander getrennten Flüssiggaskanalsystemen versehen, von denen das eine eine Verbindung zwischen dem ersten Vorratsraum mit dem Verbrennungsraum und das zweite eine Verbindung des zweiten Vorratsraums mit dem Verbrennungsraum schafft. Durch Anordnung der in die Vorratsräume einmündenden Öffnungen der betreffenden Flüssiggaskanalsysteme kann die zeitliche Einströmung der beiden Flüssiggaskomponenten zu Beginn der Einleitung der Verbrennung zeitlich gesteuert werden.

Vorzugsweise weist der erste Vorratsbehälter auf seiner dem Kolben abgewandten Seite eine Einbuchtung auf, in der der zweite Vorratsbehälter aufgenommen ist. Im Bereich der Einbuchtung weist der erste Vorratsbehälter eine verringerte Höhe (vom Kolben innerhalb des ersten Vorratsbehälters zurückzulegender Weg) auf. Damit kann der vom Kolben zum Durchdringen bzw. Durchstoßen beider Vorratsbehälter zurückzulegende Weg klein gehalten werden.

Nachfolgend werden anhand der Figuren Ausführungsbeispiele der Erfindung näher erläutert. Im einzelnen zeigen:
- Fig. 1: im Längsschnitt einen Rund-Gasgenerator mit Flüssiggas als gasentwickelndes Material, wobei der Kolben in seiner Position vor Zündung der Anzündladung angeordnet ist,
- Fig. 2: einen Längsschnitt durch den Rund-Gasgenerator nach Fig. 1 mit von dem Kolben durchstoßener Trennwand zwischen Vorratsraum und Verbrennungsraum,
- Fig. 3: ein weiteres Ausführungsbeispiel eines Rund-Gasgenerators im Längsschnitt, bei dem zwei Vorratsbehälter für zwei Flüssiggaskomponenten vorgesehen sind und
- Fig. 4: einen Längsschnitt durch den Rund-Gasgenerator gemäß Fig. 3 bei von dem Kolben durchdrungenen Behälterwänden.

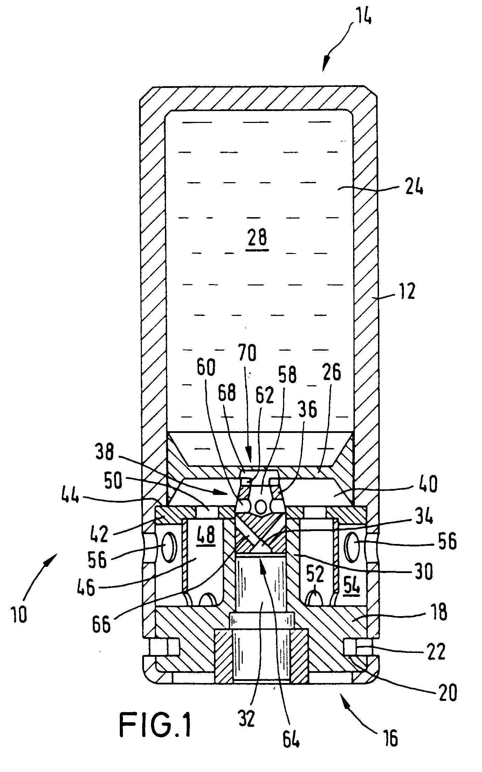

In Fig. 1 ist im Längsschnitt ein Rund-Gasgenerator 10 dargestellt, der ein rohrähnliches Gehäuse 12 aufweist. An seinem einen Stirnende 14 ist das Gasgeneratorgehäuse 12 einstückig mit dem Umfangswandabschnitt verbunden, während das andere Stirnende 16 durch einen Verschlußdeckel 18 verschlossen ist. Der Verschlußdeckel 18 ist von dem Umfangswandabschnitt des Gehäuses 12 umschlossen und weist eine Umfangsnut 20 auf, in die Innenvorsprünge 22 des Gehäuses 12 eingetaucht sind. Die Innenvorsprünge 22 sind durch Kerbung des Gehäuses 12 entstanden, wobei der Verschlußdeckel 18 als Matrize dient. Die so entstandenen Innenvorsprünge 22 sind äußerst widerstandsfähig, was Scherbeanspruchungen bei Ausübung von axial wirkenden Kräften auf den Verschlußdeckel 18 angeht.

Im Gehäuse 12 ist ein Vorratsraum 24 ausgebildet, der gegenüber dem übrigen Innenbereich des Gehäuses 12 durch eine Trennwand 26 abgeschlossen ist, deren Umfangsrand an der Innenfläche des Gehäuses 12 anliegt. Der Vorratsraum 24 zwischen Trennwand 26 und dem oberen stirnseitigen Ende 14 des Gehäuses 12 ist mit einem Flüssiggas 28 vollständig ausgefüllt.

Der Verschlußdeckel 18 weist einen nach innen gerichteten zentralen und koaxial angeordneten hülsenartigen Fortsatz 30 auf, in dessen zylindrischen Innenraum eine Anzündvorrichtung 32 mit (nicht dargestellter) Anzündladung untergebracht ist. Das Gehäuse der Anzündvorrichtung 32 ist gegen axiale Verschiebungen gesichert in dem zylindrischen Innenraum 34 des Fortsatzes 30 befestigt. Der Innenraum 34 bildet einen Vorverbrennungraum, der bei gezündeter Anzündvorrichtung 32 von den bei der Verbrennung der Anzündladung entstehenden heißen Verbrennungsgasen ausgefüllt ist.

Neben der Anzündvorrichtung 32 befindet sich in dem zylindrischen Vorverbrennungsraum 34 auch ein bewegbarer Kolben 36, der an der Innenfläche des hülsenartigen Fortsatzes 30 längsverschiebbar geführt ist. Der Kolben 36 ist zum größten Teil von dem Innenraum 34 aufgenommen und ragt lediglich im Bereich seines vorderen Endes 38 aus diesem heraus. Das vordere Ende 38 des Kolbens 36 befindet sich in dem eigentlichen Verbrennungsraum 40, der zwischen dem Vorverbrennungsraum 34 und der Trennwand 26 angeordnet ist. An der Stirnseite des hülsenartigen Fortsatzes 30 des Verschlußdeckels 18 ist ein Plattenelement 42 angeordnet, das eine mit dem zylindrischen Vorverbrennungsraum 34 fluchtende zentrale Durchgangsöffnung für den Kolben 36 aufweist. Das Plattenelement 42 ist im Randbereich dieser Öffnung gegen die Stirnseite des hülsenartigen Fortsatzes 30 des Verschlußdeckels 18 abgestützt, während es in seinem Umfangsrandbereich an einer auf der Innenseite des Gehäuses 12 ausgebildeten Umfangsschulter 44 anliegt. Zwischen dem ebenen Abschnitt des Verschlußdeckels 18 und dem Plattenelement 42 ist ein weiterer Hülsenkörper 46 angeordnet, der einen größeren Innendurchmesser als der Fortsatz 30 des Verschlußdeckels 18 aufweist und der konzentrisch zum Fortsatz 30 angeordnet ist. Der Ringraum 48 zwischen dem Hülsenkörper 46 und dem Fortsatz 30 ist über Öffnungen 50 in dem Plattenelement 42 mit dem Verbrennungsraum 40 verbunden. Öffnungen 52 an dem am Verschlußdeckel 18 anliegenden unteren Randabschnitt des Hülsenkörpers 46 schaffen eine Verbindung des Ringraumes 48 mit dem radial außenliegenden Ringraum 54 zwischen Hülsenkörper 46 und Gehäuse 12. Der Ringraum 54 ist über Austrittsöffnungen 56 in dem Gehäuse 12 zum Auslaß der Verbrennungsgase aus dem Verbrennungsraum 40 über die beiden Ringräume 48,54 versehen.

In seinem vorderen Ende 38 ist der Kolben 36 mit einem Flüssiggaskanalsystem ausgestattet, das einen axialen ersten Kanalabschnitt 58 aufweist, der in der vorderen Stirnseite des Kolbens 36 endet. Im Bereich des anderen Endes des ersten Kanalabschnitts 58 münden in diesen mehrere radiale zweite Kanalabschnitte 60 ein, die ihrerseits in der Umfangsfläche des zylindrischen Kolbens 36 enden. Das stirnseitige Ende des ersten Flüssiggaskanalabschitts 58 ist von zahnartigen Vorsprüngen 62 umgeben, die am vorderen Ende 38 des Kolbens 36 ausgebildet sind. Im Bereich seines hinteren Endes 64 ist der Kolben 36 mit mehreren schräg zur axialen Erstreckung des Kolbens 36 verlaufenden Zündkanälen 66 versehen. Die Zündkanäle 66 beginnen in einem zentralen Bereich der hinteren Stirnseite des Kolbens 36 und enden in der Umfangsfläche des Kolbens 36. Bei in dem Vorverbrennungsraum 34 befindlichem Kolben 36 sind die Zündkanäle 66 durch die Innenfläche des Fortsatzes 30 verschlossen.

In der Trennwand 26 ist, dem vorderen Ende 38 des Kolbens 36 gegenüberliegend eine konisch sich verjüngende Ausnehmung 68 ausgebildet, in deren Bereich die Wandstärke der Trennwand 26 verringert ist (s. Fig. 1).

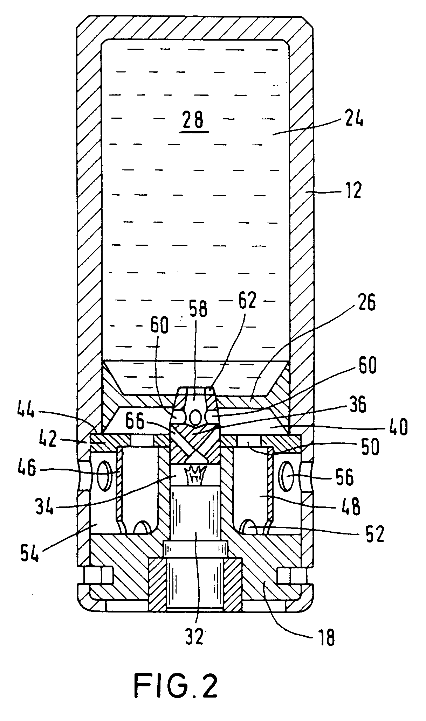

Nachfolgend soll anhand der Fign. 1 und 2 der im Gasgenerator 10 ablaufende Vorgang zum Zünden des Flüssiggases 28 beschrieben werden. Zunächst zündet die Anzündladung der Anzündvorrichtung 32, wobei die dabei entstehenden Verbrennungsgase den Vorverbrennungsraum 34 ausfüllen. Aufgrund des ansteigenden Druckes in dem Vorverbrennungsraum 34 bewegt sich der Kolben 36 in axialer Richtung auf die Trennwand 24 zu, die er im Bereich der Ausnehmung 68 durchstößt. Der Kolben 36 bewegt sich solange vor, bis aufgrund seines konischen vorderen Endes 38 und der konischen Ausnehmung 68 eine Selbsthemmung eintritt. In diesem Zustand ist der Kolben 36 an seinem vorderen Ende 38 mit der Trennwand 26 verkeilt und an dieser klemmend gehalten. Dabei ist die Trennwand 26 an der durch die Ausnehmung 68 definierten Durchstoßstelle 70 aufgebrochen; in dieser Durchstoßstelle 70 ist das vordere Ende 38 des Kolbens 26 eingetaucht, wie in Fig. 2 dargestellt ist.

Sobald die Trennwand 26 von dem vorderen Ende 38 des Kolbens 36 durchstoßen ist, strömt das in dem Vorratsraum 24 unter Druck stehende Flüssiggas 28 über den ersten und die zweiten Flüssiggaskanalabschnitte 58,60 in den Verbrennungsraum 40 hinein. Aufgrund der Expansion im Verbrennungsraum 40 verdampft das Flüssiggas dabei. Nahezu zeitgleich mit der Schaffung der Verbindung zwischen dem Vorratsraum 24 und dem Verbrennungsraum 40 über die Kanalabschnitte 58,60 werden auch der Vorverbrennungsraum 34 und der (Haupt-)Verbrennungsraum 40 über die Zündkanäle 66 miteinander verbunden, so daß neben Flüssiggas auch die heißen Verbrennungsgase aus der Verbrennung der Anzündladung in den Verbrennungsraum 40 eindringen. Wie in Fig. 2 dargestellt, enden nämlich die Anzündkanäle 66 bei in die Trennwand 26 eingedrungenem vorderen Ende 38 des Kolbens 36 in dem Verbrennungsraum 40 oberhalb des Plattenelementes 42. Die heißen Verbrennungsgase zünden das einströmende Flüssiggas 28, so daß im Verbrennungsraum 40 eine Verbrennung des Flüssiggases 28 eingeleitet wird. Die dabei entstehenden Verbrennungsgase führen zu einem Druckanstieg im Verbrennungsraum 40. Dieser Verbrennungsgasdruck wirkt auf die Trennwand 26 und bewegt diese zum stirnseitigen Ende 14 des Gehäuses 12 hin. Dabei wird der mit seinem vorderen Ende 28 klemmend in der Trennwand 26 gehaltene Kolben 36 mit der Trennwand 26 mitbewegt, wobei sich sein hinteres Ende 64 aus dem Vorverbrennungsraum 34 herausbewegt. Durch die Vorbewegung der Trennwand 26 wird das Flüssiggas 28 im Vorratsraum 24 ständig einem Druck zum Herausströmen des Flüssiggases 28 über die Kanalabschnitte 58,60 in den Verbrennungsraum 40 ausgesetzt. Da sich in dem Verbrennungsraum 40 ständig heiße Verbrennungsgase bilden bzw. vorhanden sind, unterhält sich der Verbrennungsprozeß des Flüssiggases 28 sozusagen von selbst, bis sämtliches Flüssiggas 28 aus dem Vorratsraum 24 in den immer größer werdenden Verbrennungsraum 40 eingespritzt ist. Die heißen Verbrennungsgase gelangen aus dem Verbrennungsraum über die Öffnungen 50 in den Ringraum 48 und von dort aus weiter über die Öffnungen 52 in den äußeren Ringraum 54, von wo aus sie über die Austrittsöffnungen 56 austreten.

Falls gewünscht können in einem der beiden Ringräume 48,54 Katalysatoren aus einem geeigneten Stoff in Form von Durchströmungssieben angeordnet werden, um eine katalytische Nachreaktion der Verbrennungsgase zur Reduktion gesundheitsschädlicher Gasanteile einzuleiten.

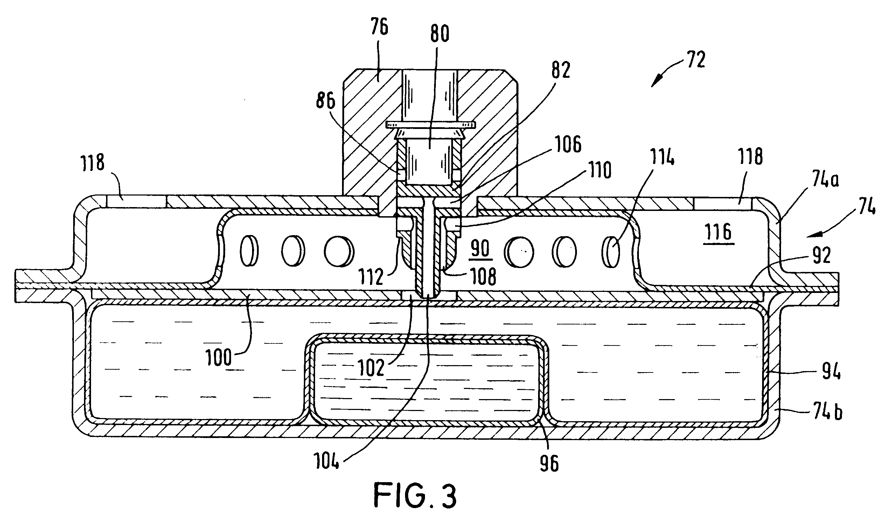

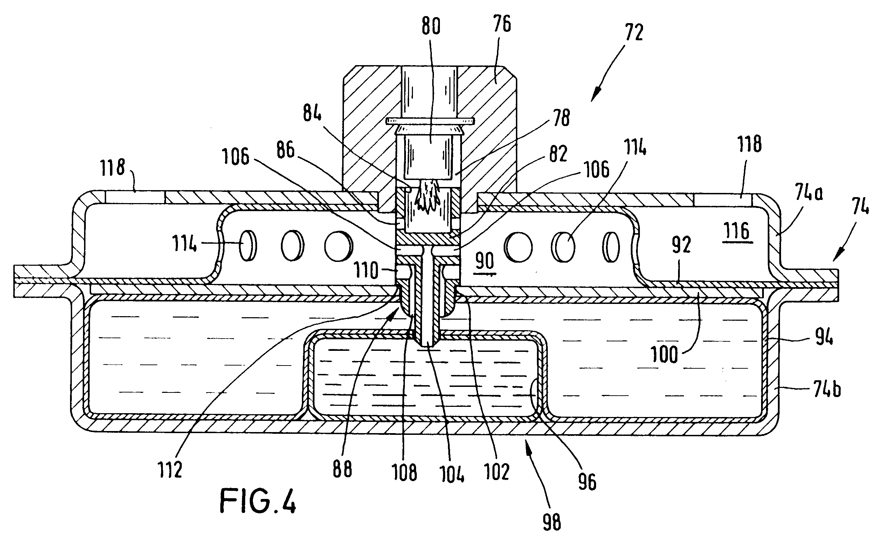

Anhand der Fign. 3 und 4 wird nachfolgend ein zweites Ausführungsbeispiel eines Rund-Gasgenerators mit zwei getrennt bevorrateten Flüssiggaskomponenten beschrieben.

Der in den Fign. 3 und 4 dargestellte Rund-Gasgenerator 72 ist mit einem zweiteiligen Gehäuse 74 versehen. Die beiden Gehäusehälften 74a und 74b sind über Ringflansche miteinander verbunden. An der oberen Gehäusehälfte 74a ist mittenzentriert ein zylindrischer Halterungsblock 76 befestigt, in dessen zylindrischen Innenraum 78 (s. Fig. 4) eine Anzündvorrichtung 80 angeordnet ist. Der Innenraum 78 stellt den Vorverbrennungsraum dar, in dem sich die Verbrennungsgase bei Verbrennung der Anzündladung ausbreiten. In dem Vorverbrennungsraum 78 verschiebbar geführt ist ein Kolben 82, der ein kappenförmige ausgehöhltes die Anzündvorrichtung 80 umgebendes bzw. dieser zugewandtes hinteres Ende 84 aufweist. Im Bereich seines hinteren Endes 84 sind in die Wandung des Kolbens 82 mehrere radiale Zündkanäle 86 ausgebildet.

Das vordere Ende 88 des Kolbens 82 ragt aus dem Vorverbrennungsraum 78 heraus in den (Haupt-)Verbrennungsraum 90, der konzentrisch in dem oberen Gehäuseabschnitt 74 ausgebildet ist und eine Art Hutform aufweist. Der Umfangsrand der napfförmigen den Verbrennungsraum 90 begrenzenden Wand 92 erstreckt sich zwischen den Flanschen der beiden Gehäusehälften 74a,74b; in ihrem mittleren Bereich liegt die Wand 82 von innen an der oberen Gehäusehälfte 74a an.

Der Bereich unterhalb der Wand 92 ist mit zwei Behältern 94,96 ausgefüllt, die beide vollständig vom unteren Gehäuseabschnitt 74b aufgenommen sind. Die beiden Behälter 94,96 weisen eine vergleichsweise dünne Behälterwandung auf, die, wie weiter unten noch erläutert werden wird, eine Verformung der Behälter bei Druckbeaufschlagung zuläßt. Der Behälter 94 füllt den gesamten Querschnitt der unteren Gehäusehälfte 74b aus und weist an seiner Unterseite eine Einbuchtung 98 auf, in die der zweite Behälter 96 im wesentlichen formschlüssig eingebracht ist. Der zweite Behälter 96 ist also sowohl von dem Behälter 94 als auch von der unteren Gehäusehälfte 74b des Gasgenerators 72 eingeschlossen. In den beiden Behältern 94,96 befinden sich unterschiedliche Flüssiggaskomponenten, die, wie noch erläutert werden wird, zusammen in den Verbrennungsraum 90 eingespritzt werden.

Zwischen der den Verbrennungsraum 90 begrenzenden Wand 92 und dem Behälter 94 ist eine formstabile Druckplatte 100 angeordnet, die in ihrem mittleren Bereich den Verbrennungsraum 90 von dem Behälter 94 trennt. Koaxial zum Kolben 82 ist in der Druckplatte 100 eine zentrale Öffnung 102 ausgebildet. Im Bereich der Öffnung 102 sind der Verbrennungsraum 90 und der Innenraum des Behälters 94 lediglich durch die dünne Wand des Behälters 94 voneinander getrennt. Wegen der Einbuchtung 98 an der Unterseite des Behälters 94 weist der zweite Behälter 96 im Bereich der Öffnung 102 in der Druckplatte 100 lediglich einen vergleichsweise geringen Abstand zum Verbrennungsraum 90 auf, wobei sich zwischen dem Behälter 96 und dem Verbrennungsraum 90 der Behälter 94 erstreckt.

Wie in den Fign. 3 und 4 zu erkennen ist, sind in dem vorderen Ende 88 des Kolbens 82 zwei voneinander getrennte Flüssiggaskanalsysteme ausgebildet. Diese beiden Flüssiggaskanalsysteme schaffen bei von dem vorderen Kolbenende 88 durchstoßenen Behältern 94 und 96 eine Verbindung zwischen jedem Behälterinnenraum mit dem Verbrennungsraum. Zu dem ersten Flüssiggaskanalsystem gehört ein zentraler und axial im vorderen Kolbenende 88 verlaufender erster Kanalabschnitt 104, an dessen im Kolen 82 liegenden Ende mehrere radiale zweite Flüssiggaskanäle 106 einmünden, die ihrerseits in der Umfangsfläche des Kolbens 82 enden. Um den Flüssiggaskanalabschnitt 104 herum ist ein Ringkanalabschnitt 108 im vorderen Kolbenende 88 ausgebildet; dieser Ringkanalabschnitt 108 gehört zum zweiten Flüssiggaskanalsystem. Das in dem Kolben 82 gelegene Ende des Ringkanalabschnitts 108 ist mit ebenfalls radial verlaufenden axialen Kanalabschnitten 110 verbunden, die in der Umfangsfläche des Kolbens 82 enden. Die Kanalabschnitte 110 enden dabei näher am vorderen Ende 88 des Kolbens 82 als dies bei den radialen Kanalabschnitten 106 der Fall ist.

Nachfolgend soll kurz der in dem Gasgenerator 72 ablaufende Prozeß zur Einleitung der Zündung der beiden in den Behältern 94,96 bevorrateten Flüssiggaskomponenten im Verbrennungsraum 90 beschrieben werden. Bei Zündung der Anzündladung der Anzündvorrichtung 80 entsteht im Vorverbrennungsraum 78 ein Überdruck, infolge dessen der Kolben 82 axial von der Anzündvorrichtung 80 weg in Richtung auf die beiden Behälter 94,96 vorbewegt wird. Das vordere Ende 88 des Kolbens 82 durchstößt bei der Vorbewegung des Kolbens 82 die dünne Wandung des Behälters 94 im Bereich der Druckplattenöffnung 102. Anschließend durchfährt das vordere Kolbenende 88 den Innenraum des Behälters 94, bis es durch die beiden aneinanderliegenden Wände der Behälter 94,96 hindurch gedrungen ist. Sobald das vordere Kolbenende 88 bis in den Behälter 96 eingetaucht ist, ist dessen Innenraum über die Kanalabschnitte 104 und 106 mit dem Verbrennungsraum 90 verbunden. Wie in den Fign. 3 und 4 zu erkennen ist, ist das vordere Kolbenende 88 abgestuft, wobei das stirnseitige Ende des Kanals 104 in Bewegungsrichtung des Kolbens 82 betrachtet dem stirnseitigen Ende des Ringkanalabschnitts 108 vorgelagert ist. Während also der Kanal 104 bei in die Behälter 94,96 hineingetriebenem Kolben 82 bis in den in Bewegungsrichtung des Kolbens 82 zweiten Behälter 96 eindringt, endet der Ringkanalabschnitt 108 im Behälter 94, wie in Fig. 4 dargestellt. Über den Ringkanalabschnitt 108 und die radialen Kanalabschnitte 110 gelangt also das in dem ersten Behälter 94 befindliche Flüssiggas in den Verbrennungsraum 90; denn sämtliche radialen Kanalabschnitte 106 und 110 enden in demjenigen Umfangsflächenabschnitt des Kolbens 82, der sich innerhalb des Verbrennungsraums 90 befindet, wenn das vordere Ende 88 des Kolbens 82 in die Behälter 94,96 hineingetrieben ist. Die Vorbewegung des Kolbens 82 wird durch eine Umfangsschulter 112 am Kolben 82 begrenzt, die in Anlage mit dem Öffnungsrand der Druckplatte 100 gelangt. Der Durchmesser des Kolbens 82 im Bereich der Umfangsschulter 102 ist geringfügig größer als der Innendurchmesser der Öffnung 102 in der Druckplatte 100, so daß der Kolben 88 klemmend mit der Druckplatte 100 verbunden ist.

Wie anhand von Fig. 4 zu erkennen ist, sind nicht nur die Behälter 94,96 über die ihnen zugeordneten Flüssiggaskanalsysteme mit dem Verbrennungsraum 90 verbunden, sondern auch der Vorverbrennungsraum 78 über die außerhalb von diesem angeordneten Zündkanäle 86 mit dem Verbrennungsraum 90 verbunden. Die Verbrennungsgase des Vorverbrennungsraums 78 gelangen also über Zündkanäle 86 in den Verbrennungsraum 90, wo sie die beiden Komponenten der ebenfalls einströmenden Flüssiggase zünden.

Bei Zündung der Flüssiggase in dem Verbrennungsraum 90 steigt der Innendruck in diesem, wobei auf die Druckplatte 100 ein Druck ausgeübt wird. Die wegen ihrer Dünnwandigkeit leicht verformbaren Behälter 94,96 verformen sich mit steigendem Verbrennungsgasdruck mit der Folge, daß die Flüssiggase aus den Behältern 94,96 über die jeweiligen Kanalabschnitte in den Verbrennungsraum 90 hineingespritzt werden. Die Verbrennungsgase treten aus dem Verbrennungsraum 90 über in der Wand 92 ausgebildete Öffnungen 114 aus, um in einen Ringraum 116 zwischen der Wand 92 und der oberen Gehäusehälfte 74a hineinzuströmen. Über in der oberen Gehäusehälfte 74a ausgebildete Austrittsöffnungen 118 gelangen die Verbrennungsgase ins Freie.

Aufgrund der Verformbarkeit der beiden Behälter 94,96 läuft nach der Einleitung der Verbrennung der in den Verbrennungsraum 90 einströmenden Flüssiggase ein selbsterhaltender Verbrennungsprozeß ab, da durch die Komprimierung der Behälter 94,96 ständig weiteres Flüssiggas in den Verbrennungsraum eingespritzt wird.

## Patentansprüche

1. Gasgenerator, insbesondere für ein aufblasbares Aufprallkissen zum Schutz eines Kraftfahrzeug-Insassen vor Verletzungen, mit
- einem Gehäuse (12;74),
- einem im Gehäuse (12;74) untergebrachten verbrennbaren gasentwickelnden Material zum Erzeugen von Druckgas,
- einer zündbaren Anzündladung für das gasentwickelnde Material,
- einem in dem Gehäuse (12;74) angeordneten Verbrennungsraum (40;90), in dem das gasentwickelnde Material verbrennt, wobei das dabei entstehende Druckgas über mindestens eine Austrittsöffnung (56;118) in der Gehäusewand austritt,
- einem Vorratsraum (24;94;96) zum Speichern von Flüssiggas (28), wobei der Vorratsraum (24;94;96) von dem Verbrennungsraum (40;90) durch eine Trennwand (26) getrennt ist und
- einem längsverschiebbar geführten Kolben (36;82), der sich bei gezündeter Anzündladung aufgrund des Gasdrucks infolge der Verbrennung der Anzündladung in Richtung auf die Trennwand (26) bewegt und diese durchstößt,
- wobei im Bereich des in Bewegungsrichtung hinteren Endes (64;84) des Kolbens (36;82) die Verbrennungsgase der Anzündladung in den Verbrennungsraum (40;90) gelangen und im Bereich des vorderen Endes (38;88) des Kolbens (36;82) Flüssiggas (28) aus dem Vorratsraum (24;94,96) in den Verbrennungsraum (40;90) gelangt,
**dadurch gekennzeichnet**, daß das gasentwickelnde Material Flüssiggas (28) ist, welches bei gezündeter Anzündladung kontrolliert in den Verbrennungsraum (40;90) hineingelangt und in diesem gezündet wird.

2. Gasgenerator nach Anspruch 1, dadurch gekennzeichnet, daß der Kolben (36;82) mit mindestens einem Flüssiggaskanal (58,60;104,106) versehen ist, der bei in die Trennwand (28) hineingetriebenem Kolben (36;82) den Vorratsraum (24;94,96) zum Einlaß von Flüssiggas (28) mit dem Verbrennungsraum (40;90) verbindet, und daß der Kolben (36;82) mit mindestens einem Zündkanal (66;86) versehen ist, über den bei in die Trennwand (26) hineingetriebenem Kolben (36;82) die Verbrennungsgase der Anzündladung in den Verbrennungsraum (40;90) hineinströmen.

3. Gasgenerator nach Anspruch 2, dadurch gekennzeichnet, daß der Kolben (36;82) an der Begrenzungswand (30;76) eines Vorverbrennungsraums (34;78) anliegend längsverschiebbar geführt ist, in dem die Anzündvorrichtung (32;80) untergebracht ist, und daß der mindestens eine Zündkanal (66;86) solange während der Vorbewegung des Kolbens (36;82) durch die Vorverbrennungsraumwand (30;76) verschlossen ist, bis er mit seinem vorderen Ende (38;88) die Trennwand (26) zwischen dem Verbrennungsraum (40;90) und dem Vorratsraum (24;94,96) durchstoßen hat.

4. Gasgenerator nach Anspruch 2 oder 3, dadurch gekennzeichnet, daß im Bereich des in Bewegungsrichtung vorderen Endes (38;88) des Kolbens (36;82) ein axial verlaufender zu der vorderen Stirnfläche des Kolbens (36;82) offener erster Flüssiggaskanalabschnitt (58;104) ausgebildet ist, der mit radial verlaufenden zur Umfangsseitenfläche des Kolbens (36;82) offenen zweiten Flüssiggaskanalabschnitten (60;106) verbunden ist.

5. Gasgenerator nach einem der Ansprüche 2 bis 4, dadurch gekennzeichnet, daß mehrere, vom Mittelbereich der hinteren Stirnfläche des Kolbens (36;82) ausgehende, schräg zur Längsachse des Kolbens (36; 82) verlaufende und in dessen Umfangsseitenfläche endende Zündkanäle (66;86) im Bereich des hinteren Kolbenendes (64;84) ausgebildet sind.

6. Gasgenerator nach einem der Ansprüche 1 bis 5, dadurch gekennzeichnet, daß das vordere Kolbenende (38;88) bei in die Trennwand (26) eingetriebenem Kolben (36;82) mit der Trennwand (26) vorzugsweise klemmend fest verbunden ist.

7. Gasgenerator nach einem der Ansprüche 1 bis 6, dadurch gekennzeichnet, daß die Trennwand (26) eine Durchstoßstelle (70) für den Kolben (36) aufweist, bei deren Durchstoßen in der Trennwand (26) ein Loch mit sich zum Vorratsraum (24) verjüngendem Durchmesser entsteht.

8. Gasgenerator nach einem der Ansprüche 1 bis 6, dadurch gekennzeichnet, daß die Trennwand (26) eine Durchstoßstelle (70) für den Kolben (36) aufweist, in deren Bereich die Trennwand (26) eine verringerte Wandstärke aufweist.

9. Gasgenerator nach Anspruch 8, dadurch gekennzeichnet, daß die Trennwand (26) im Bereich ihrer Durchstoßstelle (70) auf ihrer dem Kolben (36) zugewandten Seite eine sich konisch verjüngende Ausnehmung (68) aufweist.

10. Gasgenerator nach einem der Ansprüche 6 bis 9, dadurch gekennzeichnet, daß der Kolben (36) ein konisch sich verjüngendes vorderes Ende (38) aufweist und daß sich das vordere Kolbenende (38) mit der Trennwand (26) beim Durchstoßen derselben klemmend verbindet.

11. Gasgenerator nach Anspruch 9, dadurch gekennzeichnet, daß die Trennwand (26) in Kolbenbewegungsrichtung verschiebbar in dem Gehäuse (12) geführt ist und daß sich die Trennwand (26) bei hineingetriebenem Kolben (36) zusammen mit diesem aufgrund des ansteigenden Verbrennungsgasdrucks im Verbrennungsraum (40) bewegt, wobei sich der Vorratsraum (24) unter Austreiben von Flüssiggas (28) in den Verbrennungsraum (40) in seinem Volumen verringert.

12. Gasgenerator nach einem der Ansprüche 1 bis 11, dadurch gekennzeichnet, daß der Vorratsraum von einem bei Druckbeaufschlagung verformbaren Behälter (94) begrenzt ist, dessen den Vorratsraum von dem Verbrennungsraum (90) trennender Wandabschnitt die von dem Kolben (86) durchstoßbare Trennwand ist.

13. Gasgenerator nach Anspruch 12, dadurch gekennzeichnet, daß innerhalb des Verbrennungsraums (90) eine an dem Vorratsbehälter (94) anliegende formstabile Druckplatte (100) zum Drücken gegen den Vorratsbehälter (94) bei der Flüssiggasverbrennung angeordnet ist und daß die Druckplatte (100) eine mit der Durchstoßstelle des Vorratsbehälters (94) fluchtende Öffnung (102) aufweist.

14. Gasgenerator nach einem der Ansprüche 1 bis 13, dadurch gekennzeichnet, daß in dem Gehäuse (74) ein weiterer Vorratsbehälter (96) für ein weiteres Flüssiggas vorgesehen ist, wobei der Kolben (82) auch diesen Behälter (96) an einer Druchbruchstelle durchstößt, und daß der Kolben (82) mindestens einen weiteren Flüssiggaskanal (104,106) zum Verbinden des weiteren Vorratsbehälters (96) mit dem Verbrennungsraum (90) bei in die Wand des weiteren Vorratsbehälters (94) eingetriebenem Kolben (82) aufweist.

15. Gasgenerator nach Anspruch 14, dadurch gekennzeichnet, daß die beiden Vorratsbehälter (94,96) in Kolbenbewegungsrichtung hintereinanderliegend angeordnet sind und daß sich das vordere Ende (88) des Kolbens (28) durch den in Kolbenbewegungsrichtung ersten Behälter (94) hindurch erstreckt und in den zweiten Behälter (96) hineinragt.

16. Gasgenerator nach Anspruch 15, dadurch gekennzeichnet, daß der in Kolbenbewegungsrichtung erste Vorratsbehälter (94) auf seiner dem Kolben (82) abgewandten Seite eine Einbuchtung (98) zur Aufnahme des zweiten Vorratsbehälters (96) aufweist.

## Claims

1. A gas generator particularly for an inflatable impact cushion for protecting an occupant of a motor vehicle from injury having
- a housing (12;74),
- a combustible gas-producing material for generating gas under pressure, accommodated in the housing (12;74),
- an ignitible ignition charge for the gas-producing material and
- a combustion chamber (40; 90) arranged in the housing (12;74) and in which the gas-producing material burns, with the gas under pressure forming as a result emerging by way of at least one outlet opening (56; 118) in the housing wall,
- a storage chamber (24;94,96) for storing liquid gas (28), with the storage chamber (24;94,96) being separated from the combustion chamber (40;90) by a partition wall (26) and
- a lengthwise displaceably guided piston (36;82) which is displaced in the direction of the partition wall (26) and penetrates this on firing of the ignition charge on account of the gas pressure as a consequence of the combustion of the ignition charge
- whereby, the combustion gases of the ignition charge reach the combustion chamber (40;90) in the region of the rear end (64;84) of the piston (36;82) in the direction of movement and liquid gas (28) from the storage chamber (24;94,96) reaches the combustion chamber in the region of the front end (38;88) of the piston (36;82),
characterised in that the gas generating material is liquid gas (28), which reaches the combustion chamber (40;90) in a controlled manner when the ignition charge is fired and is ignited in this.

2. A gas generator according to claim 1, characterised in that the piston (36; 82) is provided with at least one liquid gas channel (58,60;104,106), which, when the piston (36;82) is driven into the partition wall (28) connects the storage chamber (24;94,96) for the inlet of liquid gas (28) to the combustion chamber (40;90) and in that the piston (36; 82) is provided with at least one ignition channel (66;86), by way of which, when the piston (36;82) is driven into the partition wall (26), the combustion gases of the ignition charge flow into the combustion chamber (40;90).

3. A gas generator according to claim 2, characterised in that the piston (36; 82) is guided in a longitudinally displaceable manner to be adjacent the boundary wall (30;76) of a precombustion chamber (34; 78) in which the ignition device (32;80) is accommodated, and in that at least one ignition channel (66;86) is closed during the forward movement of the piston (36;82) by the precombustion chamber wall (30;76), until, with its front end (38; 88), it has penetrated the partition wall (26) between the combustion chamber (40;90) and the storage chamber (24;94,96).

4. A gas generator according to claim 2 or 3, characterised in that there is formed in the region of the front end (38;88) of the piston (36; 82) in the direction of movement a first liquid gas channel section (58; 104) open towards the front end of the piston (36; 82) and extending axially, which first liquid gas channel is connected to the second liquid gas channel sections (60;160) open towards the peripheral side surface of the piston (36; 82) and extending radially.

5. A gas generator according to one of claims 2 to 4, characterised in that several ignition channels (66;86) emanating from the central region of the rear face of the piston (36; 82), extending inclined to the longitudinal axis of the piston (36; 82) and ending in its peripheral side surface, are formed in the region of the piston rear end (64;84).

6. A gas generator according to one of claims 1 to 5, characterised in that, when the piston (36;82) is driven into the partition wall (26), the piston front end (38;88) is firmly connected to the partition wall (26) preferably in a clamping manner.

7. A gas generator according to one of claims 1 to 6, characterised in that the partition wall (26) has a point of penetration (70) for the piston (36), and when this is penetrated, a hole forms in the partition wall (26) with a diameter narrowing towards the storage chamber (24).

8. A gas generator according to one of claims 1 to 6, characterised in that the partition wall (26) has a point of penetration (70) for the piston (36), in the region of which the partition wall (26) has a reduced wall thickness.

9. A gas generator according to claim 8, characterised in that the partition wall (26) has in the region of its point of penetration (70), on its side facing the piston (36), a conically narrowing recess (68).

10. A gas generator according to one of claims 6 to 9, characterised in that the piston (36) has a conically tapering front end (38) and in that the front piston end (38) is connected in a clamping manner to the partition wall (26) when said wall is penetrated.

11. A gas generator according to claim 9, characterised in that the partition wall (26) is displaceably guided in the housing (12) in the direction of the piston movement, and in that the partition wall (26) moves together with the piston (36), when this is driven in, because of the rising combustion gas pressure in the combustion chamber (40), with the storage chamber (24) being reduced in volume as the liquid gas (28) is expelled into the combustion chamber (40).

12. A gas generator according to one of claims 1 to 11, characterised in that the storage chamber is defined by a container (94) which is deformable when there is pressure action, the wall section of which chamber separating the storage chamber from the combustion chamber (90) being the partition wall able to be penetrated by the piston (86).

13. A gas generator according to claim 12, characterised in that arranged inside the combustion chamber (90) there is an inherently stable pressure plate (100) resting on the storage container (94) for pressing against the storage container (94) when there is liquid gas combustion and in that the pressure plate (100) has an opening (102) aligned with the point of penetration of the storage container (94).

14. A gas generator according to one of claims 1 to 13, characterised in that a further storage container (96) for a further liquid gas is provided in the housing (74), with the piston (82) also penetrating this container (96) at a point of penetration and in that the piston (82) has at least one further liquid gas channel (104,106) for connecting the further storage container (96) with the combustion chamber (90) when the piston is driven into the wall of the further storage container (94).

15. A gas generator according to claim 14, characterised in that both storage containers (94,96) are arranged lying in series in the direction of the piston movement and in that the front end (88) of the piston (28) extends through the first container (94) in the direction of the piston movement and extends into the second container (96).

16. A gas generator according to claim 15, characterised in that the first storage container (94) has, in the direction of the piston movement, on its end facing away from the piston (82) a bay (98) for accommodating the second storage container (96).

## Revendications

1. Générateur de gaz pour un coussin de sécurité gonflable, pour la protection d'un passager contre les blessures en cas de collision, comportant
- un boîtier (12; 74)
- un matériau combustible, générateur de gaz, logé dans le boîtier (12; 74), pour produire du gaz sous pression,
- une charge d'amorçage allumable pour le matériau générateur de gaz,
- une chambre de combustion (40; 90) agencée dans le boîtier (12; 74), dans laquelle le matériau générateur de gaz est brûlé, le gaz de pression produit s'échappant par au moins une ouverture de sortie (56; 118) dans la paroi du boîtier,
- une chambre de stockage (24; 94; 96) pour le stockage de gaz liquide (28), la chambre de stockage (24; 94; 96) étant séparée de la chambre de combustion (40; 90) par une cloison (26) et
- un piston (36; 82) qui est guidé de manière à coulisser dans la direction longitudinale et qui, lorsque la charge d'amorçage est allumée, sous la pression de gaz résultant de la combustion, se déplace en direction de la cloison (26) et perfore cette dernière,
les gaz de combustion de la charge d'amorçage entrant dans la chambre de combustion (40; 90) dans la région de l'extrémité arrière (64; 84) du piston, dans la direction de déplacement, et le gaz liquide (28) passant de la chambre de stockage (24;94,96) dans la chambre de combustion (40; 90) dans là région de l'extrémité avant du piston (36; 82),
caractérisé par le fait que le matériau générateur de gaz est du gaz liquide (28) qui, lorsque la charge d'amorçage est allumée, pénètre de manière contrôlée dans la chambre de combustion (40; 90) et est enflammé dans celle-ci.

2. Générateur de gaz selon la revendication 1, caractérisé par le fait que le piston (36; 82) est pourvu d'au moins un canal (58, 60; 104, 106) de gaz liquide qui, lorsque le piston (36; 82) a perforé la cloison (26), relie la chambre de stockage (24; 94, 96) à la chambre de combustion (40; 90) aux fins d'admettre du gaz liquide (28) et par le fait que le piston (36; 82) est pourvu d'au moins un canal d'allumage (66; 86), par l'intermédiaire duquel, les gaz de combustion de la charge d'amorçage entrent dans la chambre de combustion (40; 90) lorsque le piston (36; 82) a perforé la cloison (26).

3. Générateur de gaz selon la revendication 2, caractérisé par le fait que le piston (36; 82) est guidé avec possibilité de coulissement le long de la paroi de séparation (30; 76) d'une préchambre de combustion (34; 78) dans laquelle est logé le dispositif d'amorçage (32, 80) et par le fait que le canal d'allumage (66; 86) est maintenu fermé par la paroi de la chambre de précombustion pendant l'avance du piston (36; 82) jusqu'à ce que celui-ci ait perforé, avec son extrémité avant (38; 88), la cloison (26) entre la chambre combustion (40; 90) et la chambre de stockage (24; 94, 96).

4. Générateur de gaz selon la revendication 2 ou 3, caractérisé par le fait qu'un premier tronçon (58; 104) axial de canal de gaz liquide, ouvert en direction de la face frontale antérieure du piston (36; 82), est aménagé dans la région de l'extrémité avant (38; 88) du piston (36; 82), dans la direction de déplacement, lequel tronçon communique avec des tronçons (60; 106) radiaux de canaux de gaz liquide, ouverts en direction de la surface périphérique du piston (36; 82).

5. Générateur de gaz selon l'une des revendications 2 à 4, caractérisé par le fait que plusieurs canaux d'allumage (66; 86) qui partent de la zone centrale de la face frontale postérieure du piston (36, 82), s'étendent en biais par rapport à l'axe longitudinal du piston (36; 82) et débouchent dans la surface périphérique de celui-ci, sont aménagés dans la région de l'extrémité postérieure (64; 84) du piston.

6. Générateur de gaz selon l'une des revendications 1 à 5, caractérisé par le fait que l'extrémité antérieure (38; 88) du piston est fermement liée, de préférence par serrage, à la cloison (26) lorsque le piston (36; 82) a perforé la cloison (26).

7. Générateur de gaz selon l'une des revendications 1 à 6, caractérisé par le fait que la cloison (26) comporte un point de perforation (70) pour le piston (36), au niveau duquel, lors de la perforation de la cloison (26), est formé un trou dont le diamètre décroît en direction de la chambre de stockage (24).

8. Générateur de gaz selon l'une des revendications 1 à 6, caractérisé par le fait que la cloison (26) comporte un point de perforation (70) pour le piston (36) au niveau duquel épaisseur de paroi de la cloison (26) est plus faible.

9. Générateur de gaz selon la revendication 8, caractérisé par le fait que la cloison (26), au niveau du point de perforation (70), sur sa face tournée vers le piston (36), présente un évidement (68) qui se rétrécit en forme de cône.

10. Générateur de gaz selon l'une des revendications 6 à 9, caractérisé par le fait que le piston (36) présente une extrémité antérieure (38) qui se rétrécit en forme de cône et par le fait que l'extrémité (38) antérieure du piston se lie par serrage à la cloison (26) lors de la perforation de celle-ci.

11. Générateur de gaz selon la revendication 9, caractérisé par le fait que la cloison (26) est guidée dans le boîtier (12) avec possibilité de coulissement dans la direction de déplacement du piston et par le fait que la cloison (26), lorsque le piston (36) a perforé celle-ci, se déplace avec ledit piston du fait de l'élévation de la pression du gaz de combustion dans la chambre de combustion (40), la chambre de stockage (24) diminuant de volume en refoulant le gaz liquide (28) dans la chambre de combustion (40).

12. Générateur de gaz selon l'une des revendications 1 à 11, caractérisé par le fait que la chambre de stockage est délimitée par un récipient (94) qui se déforme sous l'action de la pression et dont la partie de paroi séparant la chambre de stockage de la chambre de combustion (90) est la paroi de séparation perforable par le piston (86).

13. Générateur de gaz selon la revendication 12, caractérisé par le fait qu'une plaque de pression (100) indéformable est disposée à l'intérieur de la chambre de combustion (90), laquelle plaque de pression est appliquée contre le récipient de stockage (94) aux fins d'appuyer sur ledit récipient de stockage (94) lors de la combustion du gaz liquide et par le fait que la plaque de pression (100) comporte une ouverture (102) qui est alignée avec le point de perforation du récipient de stockage (94).

14. Générateur de gaz selon l'une des revendications 1 à 13, caractérisé par le fait qu'il est prévu dans le boîtier (74), un récipient de stockage (96) supplémentaire pour un gaz liquide supplémentaire, le piston (82) perforant également ledit récipient (96) en un point de perforation et par le fait que le piston (82) comporte au moins un canal à gaz liquide (104, 106) supplémentaire pour relier le récipient de stockage (96) supplémentaire à la chambre de combustion (90), lorsque le piston (82) a perforé la paroi du récipient de stockage (96) supplémentaire.

15. Générateur de gaz selon la revendication 14, caractérisé par le fait que les deux récipients de stockage (94, 96) sont disposés l'un derrière l'autre dans la direction de déplacement du piston et par le fait que l'extrémité antérieure (88) du piston (28) s'étend à travers le premier récipient (94), dans la direction de déplacement du piston; et pénètre dans le second récipient (96).

16. Générateur de gaz selon la revendication 15, caractérisé par le fait que le premier récipient de stockage (94), dans la direction de déplacement du piston, comporte une cavité (98) sur sa face éloignée du piston (82) pour recevoir le deuxième réservoir de stockage (96).
